# EUROPÄISCHE PATENTSCHRIFT

(11) **EP 0 700 145 B1**
(45) Veröffentlichungstag und Bekanntmachung des Hinweises auf die Patenterteilung: **13.05.1998**
(21) Anmeldenummer: 95113076.4
(22) Anmeldetag: 19.08.1995
(51) Int. Cl.: H02M 1/12, H02M 3/335

(54) **Schaltnetzteil mit verringerter Oberwellenbelastung des Netzes**
Switching power supply with reduced harmonic network load
Alimentation à découpage avec charge harmonique du réseau diminuée

(30) Priorität: 01.09.1994 DE 4431120; 28.01.1995 DE 19502647
(43) Veröffentlichungstag der Anmeldung: 06.03.1996
(73) Patentinhaber: DEUTSCHE THOMSON-BRANDT GMBH, 78048 Villingen-Schwenningen (DE)
(72) Erfinder: Roth, Harald, D-78087 Mönchweiler (DE); Rilly, Gerard, D-78089 Unterkirnach (DE); Morizot, Gerard, D-78048 Villingen-Schwenningen (DE); Rodriguez-Duran, José I., D-78050 Villingen-Schwenningen (DE); Schulz, Thomas, D-78112 St. Georgen (DE)

(56) Entgegenhaltungen:
- EP-A- 0 598 197
- WO-A-92/02983
- PATENT ABSTRACTS OF JAPAN vol. 017, no. 371 (E-1396), 13 Juli 1993 & JP-A-05 056665 (MATSUSHITA ELECTRIC WORKS LTD), 5 März 1993

## Beschreibung

Die Erfindung geht aus von einem Schaltnetzteil gemäß dem Oberbegriff des Anspruchs 1. Schaltnetzteile bewirken eine stark impulsförmige, also oberwellenhaltige Belastung des Netzes. Eine derartige Belastung des Netzes ist unerwünscht, weil durch den Skineffekt die vorhandene Leitungsnetze schlechter ausgenutzt werden, nennenswerte Blindströme entstehen und über die Netze zusätzlich übertragene Informationen gestört werden können. Es gibt daher international zunehmend strenge Vorschriften über eine maximale Oberwellenbelastung des Netzes. Die Oberwellenbelastung wird auch als Powerfactor bezeichnet.

Die Oberwellenbelastung des Netzes läßt sich dadurch verringern, daß zwischen den Netzklemmen und dem Netzgleichrichter eine relativ große Drossel eingefügt wird. Eine derartige Drossel ist jedoch ein relativ großes und teures Bauteil.

Der Erfindung liegt die Aufgabe zugrunde, ein Schaltnetzteil mit einfachen schaltungstechnischen Mitteln so weiterzubilden, daß die Oberwellenbelastung des Netzes verringert wird und bestehende oder künftige Vorschriften über die Oberwellenbelastung eingehalten werden können. Diese Aufgabe wird durch die im Anspruch 1 angegebene Erfindung gelöst. Vorteilhafte Weiterbildungen der Erfindung sind in den Unteransprüchen angegeben.

Ein Schaltnetzteil mit sinusförmiger Stromaufnahme und geringem Oberwellengehalt ist z.B in der EP-A-0 598 197 offenbart, das einen Transformator mit Anzapfung aufweist, an die ein zusätzlicher strompfad für einen Speicherkondensator angeschlossen ist.

Bei der Erfindung ist zunächst der Ladekondensator am Ausgang des Netzgleichrichters so klein bemessen, daß seine Spannung eine ungesiebte Halbwellen-Sinusspannung gleichbleibender Polarität ist. Parallel zu der Reihenschaltung aus der Primärwicklung des Transformators und dem Schalttransistor liegt der eigentliche Speicherkondensator mit einer so großen Kapazität, daß seine Spannung eine gesiebte Gleichspannung ohne nennenswerten Wechselspannungsanteil ist. Der Ladekondensator kleiner Kapazität und der Speicherkondensator großer Kapazität sind voneinander entkoppelt, entweder völlig voneinander getrennt oder über eine Entkopplungsdiode miteinander verbunden. Zusätzlich ist der Ladekondensator über die Reihenschaltung einer Drossel und einer Diode mit einem Abgriff der Primärwicklung verbunden.

Die Reihenschaltung aus der Drossel und der Diode bildet einen zusätzlichen Ladeweg für den Speicherkondensator. Der in diesem Ladeweg fließende Strom hat in erwünschter Weise eine wesentlich längere Dauer als der normalerweise fließende impulsförmige Ladestrom. Dadurch wird die Oberwellenbelastung des Netzes stark verringert, indem der dem Netz entnommene Strom dem idealen Strom entsprechend der Netzspannung angenähert wird. Durch die Wahl des Abgriffes an der Primärwicklung, also durch das Windungsverhältnis der beiden Teilwicklungen der Primärwicklung, kann die Breite, also die Dauer dieses Stromes während einer Netzhalbwelle eingestellt werden, während die Amplitude des Stromes durch den Wert der genannten Drossel eingestellt werden kann. Der Ladekondensator bildet somit eine dynamische Spannungsquelle für den zusätzlichen Ladestrom für den großen Speicherkondensator zur Verringerung der Oberwellen.

Die erfindungsgemäße Schaltung ist relativ einfach, da im wesentlichen nur eine Drossel und zwei Dioden erforderlich sind. Sie ermöglicht eine optimale Bemessung hinsichtlich der Oberwellenbelastung, insbesondere durch die Bemessung der Induktivität und durch die Wahl des Abgriffes der Primärwicklung des Transformators. Diese Induktivität kann relativ klein bemessen sein, da sie nur einen Teil der Energie für den Speicherkondensator überträgt. Ein weiterer Vorteil besteht darin, daß bei Anwendung der Erfindung an bestehenden Schaltnetzteilen hinsichtlich Regelung und Steuerung praktisch keine Änderungen notwendig sind. Vorteilhaft ist ferner, daß durch die Beibehaltung eines großen Speicherkondensators eine hohe Sicherheit gegen Impulsspitzen erreicht wird.

Vorzugsweise sind der Ladekondesator und der Speicherkondensator durch eine Entkopplungsdiode voneinander getrennt. Diese Diode hat dabei eine Doppelfunktion. Sie dient einmal als Ladeweg für den Speicherkondensator und zum anderen zur Unterdrückung impulsartiger Störspannungen an dem Ladekondensator. Diese Diode kann gegebenenfalls auch entfallen. Dann wäre der Ladekondensator nur mit dem Ausgang des Netzgleichrichters und der Speicherkondensator mit der Primärwicklung verbunden, während zwischen diesen beiden Kondensatoren außer der Reihenschaltung der Drossel und der Diode keine Verbindung besteht.

Das Windungsverhältnis zwischen der Teilwicklung der Primärwicklung zwischen dem Abgriff und dem Schalttranistor und der Teilwicklung zwischen dem Abgriff und dem mit dem Speicherkondensator verbundenen Ende der Primärwicklung, das die Dauer des zusätzlichen Ladestromes während einer Netzteilwelle bestimmt, beträgt beispielsweise 2:1.

Der Abgriff der Primärwicklung kann auch durch das eine Ende einer Zusatzwicklung des Transformators gebildet sein, deren anderes Ende mit einem Ende der Primärwicklung verbunden ist. Vorzugsweise sind dabei mehrere parallel geschaltete Zusatzwicklungen vorgesehen. Die Primärwicklung selbst ist dabei vorzugsweise in mehrere Teilwicklungen aufgeteilt, die in getrennten Kammern eines Kammerspulenkörpers liegen, wobei jeweils in einer Kammer eine Zusatzwicklung liegt. Ein derartiger Kammerspulenkörper bewirkt eine enge Kopplung zwischen den Wicklungen. Bei dieser Lösung ist außerdem nur ein zusätzlicher Pin an dem Transformator erforderlich.

Der kleine Ladekondensator hat vorzugsweise eine Kapazität in der Größenordnung von 0,5 µF, während der große Speicherkondensator eine Kapazität in der Größenordnung von 100 µF hat. Der Ladekondensator ist dabei so bemessen, daß seine Spannung im Bereich des Nulldurchgangs der Netzspannung nicht auf null abfällt und dort stattdessen einen konstanten Wert hat.

Die Erfindung wird im folgenden anhand der Zeichnung erläutert. Darin zeigen
- Fig. 1: eine Ausführungsbeispiel der Erfindung,
- Fig. 3: ein Beispiel für eine Weiterbildung der Erfindung,

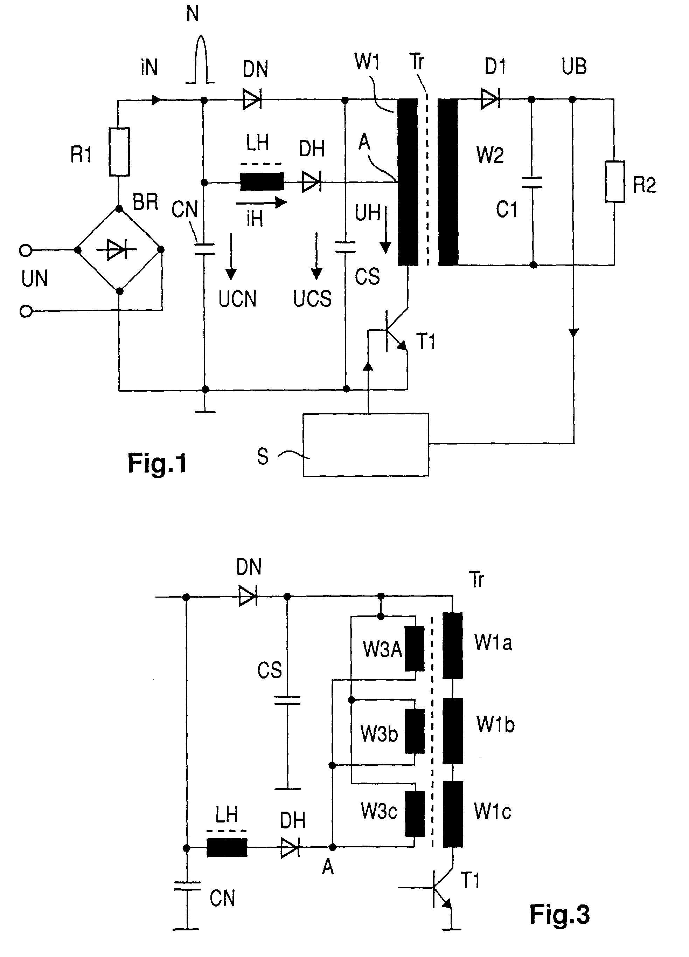

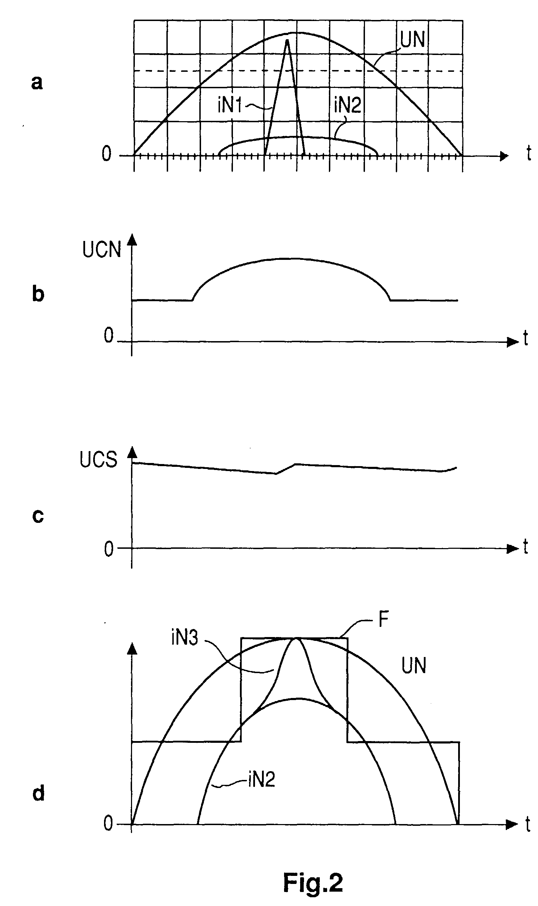

- Fig. 2: Kurven zur Erläuterung der Wirkungsweise der Schaltung nach Fig. 1,

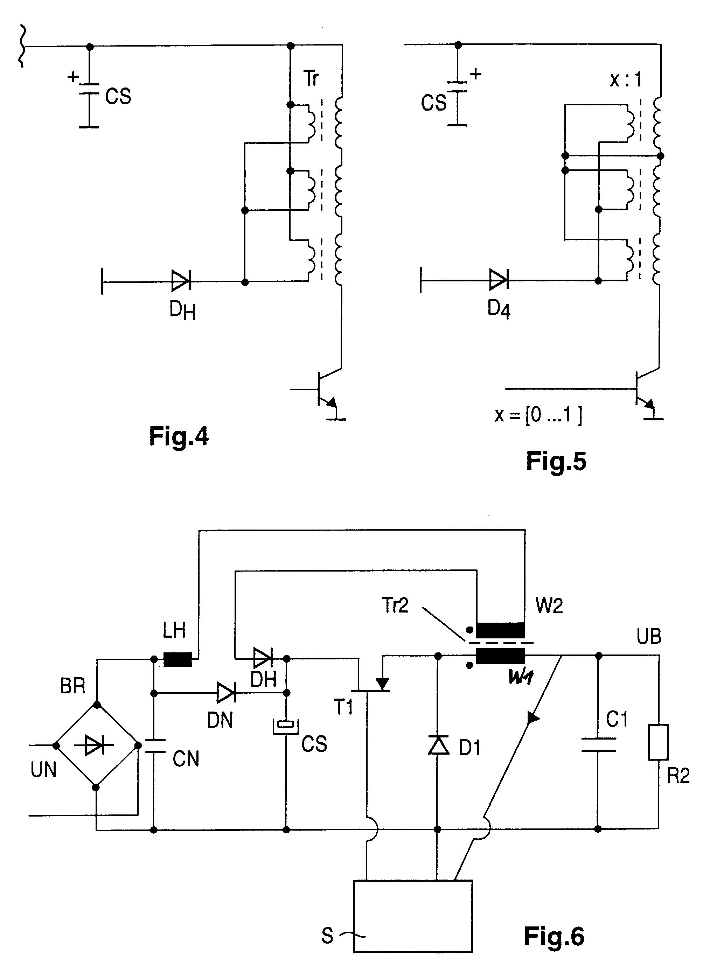

- Fig. 4-6: weitere Beispiele für Weiterbildungen der Erfindung,

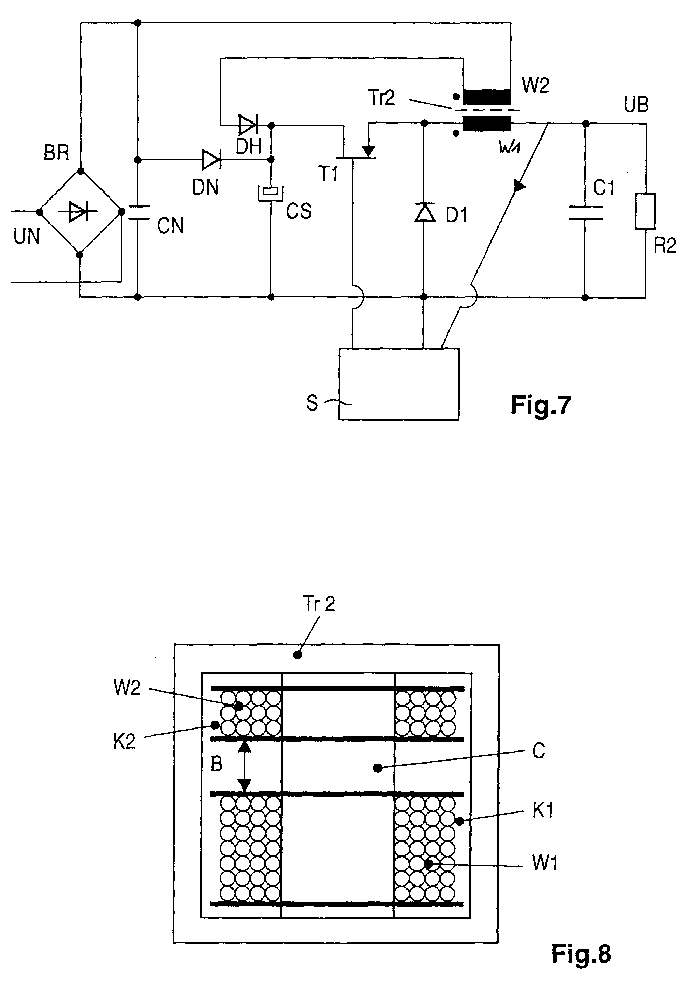

- Fig. 7: eine vereinfachte Abwandlung der Schaltung nach Fig. 6 und
- Fig. 8: die konstruktive Ausbildung des in den Schaltungen nach Fig. 6 und 7 verwendeten Übertragers.

Fig. 1 zeigt den Aufbau eines Schaltnetzteils. Dargestellt sind die Netzspannung UN, der Netzgleichrichter BR, der Strombegrenzungswiderstand R1, der Ladekondensator CN, der Transformator Tr mit der Primärwicklung W1 und der Sekundärwicklung W2, der Schalttransistor T1, die Diode D1 zur Erzeugung der Betriebsspannung UB an dem Siebkondensator C1 für die Last R2 und die von der Sekundärseite gespeiste Steuerschaltung S, die den Schalter im Sinne einer Stabilisierung der Betriebsspannung UB steuert. Der Ladekondensator CN und der Speicherkondensator CS sind durch die Entkopplungsdiode DN voneinander entkoppelt. Außerdem ist zwischen dem Ladekondensator CN und dem Abgriff A der Primärwicklung W1 die Reihenschaltung aus der Drossel LH und der Diode DH eingefügt.

Anhand der Fig. 2 wird die Wirkungsweise dieser Schaltung erläutert. Fig. 2a zeigt eine Halbwelle der Netzspannung UN. Ein Schaltnetzteil ohne besondere Maßnahme würde dem Netz einen Stromes iN1 entnehmen, der impulsartig im Bereich des Maximums von UN auftritt. Dieser Strom würde gegen bestehende oder künftige Vorschriften über die Oberwellenbelastung des Netzes verstoßen. Durch die zusätzlichen Schaltungsmaßnahmen in Fig. 1 wird in erwünschter Weise nunmehr dem Netz der Strom iN2 entnommen, der während der Netzhalbwelle eine größere Dauer und eine geringere Amplitude hat und somit dem Idealverlauf proportional zu UN weitaus besser angenähert ist.

Die Spannung UCN an dem Ladekondensator CN gemäß Fig. 2b ist durch an einen entsprechend kleinen Ladekondensator CN eine pulsierende Sinusspannung, die jedoch im Bereich der Nulldurchgänge von UN nicht auf null abfällt, sondern dort einen konstanten Wert hat. Die Spannung UCS an dem großen Speicherkondensator CS ist eine gesiebte Gleichspannung, die während einer Halbperiode praktisch nicht abfällt. Die Diode DN bildet einen ersten Ladeweg für CS, der alleine aber einen unerwünscht oberwellenhaltigen Strom iN1 erzeugen würde. Die Reihenschaltung aus LH und DH bildet jetzt einen zweiten Ladeweg für CS. Durch besondere Wahl des Wertes von LH und des Abgriffes A fließt im Bereich des Maximum von UN ein zusätzlicher Ladestrom in CS. Dieser Ladestrom hat eine längere Dauer und eine geringere Amplitude als iN1, so daß der dem Netz entnommene Strom etwa von der Form iN1 in die Form iN2 gemäß Fig. 2a umgewandelt wird.

Fig. 2d zeigt ein Fenster F, das eine Vorschrift für den dem Netz entnommenen Strom darstellt. Der Strom iN1 gemäß Fig. 2a würde wegen seiner geringen Dauer innerhalb dieses Fensters liegen und nicht wie gewünscht die Form von iN2 einnehmen. Der Strom iN2 gemäß Fig. 2d hat jedoch die erforderliche Form, indem er die durch das Fenster F gebildeten Kanten überschreitet und eine genügend lange Dauer hat. iN2 gemäß Fig. 2 würde fließen, wenn die Diode DN gesperrt bleibt oder nicht vorhanden ist. Wenn DN zusätzlich leitend wird, fließt zusätzlich noch der Strom iN3.

Die Diode DN hat außer ihrer Funktion als Ladeweg für CS noch folgende vorteilhafte Wirkung: Durch die Wirkung von DN kann die Spannung UCN praktisch nicht positiver werden als die Spannung UCS an CS. Die Spannung UCS indessen kann sich wegen des großen Speicherkondensator CS praktisch nicht impulsartig ändern. Dadurch werden somit Störimpulse N am Ausgang des Netzgleichrichters BR bzw. an dem Ladekondensator CN in erwünschter Weise unterdrückt.

Fig. 3 zeigt eine Abwandlung der Schaltung nach Fig. 1 hinsichtlich der Realisierung des Abgriffes A. Der Abgriff A ist durch eine Zusatzwicklung W3 am Transformator Tr gebildet, die aus drei parallel geschalteten Teilwicklungen W3a, W3b und W3c besteht. Die Primärwicklung W1 ist ebenfalls unterteilt in drei Teilwicklungen W1a W1b und W1c. Jeweils zwei zusammengehörende Teilwicklungen, also W1a und W3a, W1b und W3b und W1c und W3c liegen zusammen in einer Kammer eines Kammerspulenkörpers. Ein Kammerspulenkörper hat eine besonders enge Kopplung zwischen den Wicklungen und ist fertigungstechnisch rationell herstellbar. Die Lösung gemäß Fig. 3 hat den Vorteil, daß an dem Transformator Tr nur ein zusätzlicher Anschlußstift oder Pin, nämlich für den Abgriff A erforderlich ist. Ansonsten arbeitet die Schaltung gemäß Fig. 3 entsprechend der Schaltung gemäß Fig. 1.

Fig. 4 zeigt eine Ausführung des Transformators Tr. Der Kammertrafo wird parallel zu dem über verschiedene Kammern verteilten Primärwicklungen je im Verhältnis einer Anzapfwicklung gelegt. Diese Anzapfwicklungen werden parallel geschaltet.

Fig. 5 zeigt eine weitere Ausführung der Anzapfung des Transformators Tr. Die Anzapfwicklungen werden parallel geschaltet und zusätzlich auf eine Anzapfung an der Primärwicklung geführt.

Fig. 6 zeigt eine Weiterbildung der Erfindung. Die Schaltung ist ähnlich aufgebaut wie die Schaltung nach Fig. 1. Sie enthält jedoch keinen Trenntransformator, sodern ist als sogenannte Step-down-Schaltung aufgebaut. Gleiche Teile wie in Fig. 1 sind dabei mit gleichen Bezugsziffern versehen. Der linke Teil der Schaltung bis zum Schalttransistor T1 dient zur Verringerung der Oberwellenbelastung des Netzes. Der rechte Teil der Schaltung beginnend vom Schalttransistor T1 ist eine sogenannte Step-down-Schaltung, die wiederum an der Last R2 die Betriebsspannung UB erzeugt. In Reihe zu der Induktivität LH ist die Sekundärwicklung W2 des Übertragers Tr2 eingeschaltet, dessen Primärwicklung W1 die Induktivität der Step-down-Schaltung bildet. Durch die Rückkopplung von der Step-down-Schaltung in die Schaltung zur Verringerung der Oberwellenbelastung wird die Stromflußdauer vom Netzgleichrichter BR während einer Periode wieder so verlängert, daß die Oberwellenbelastung des Netzes verringert wird. Die Schaltung gemäß Fig. 6 hat mehrere Vorteile:

Durch die Kombination der Schaltung zur Verringerung der Oberwellenbelastung mit der Step-down-Schaltung gemäß Fig. 6 werden mehrere, bisher benötigte Bauteile eingespart. Insbesondere wird gegenüber bekannten Schaltungen für beide Schaltungen nur ein Schalttransistor T1 benötigt. Die Induktivität LH wird gegenüber bekannten Schaltungen beträchtlich verringert, und zwar etwa von 500 µH auf 75 µH. Dadurch, daß für beide Schaltungen nur ein Schalttransistor T1 verwendet wird, wird auch insgesamt nur eine Steuerschaltung benötigt. Die Schaltung nach Fig. 6 ist insbesondere zur Steuerung einer Metall-Halogen-Lampe geeignet, die dann die dargestellte Last R2 darstellt. Das Windungsverhältnis des Transformators Tr2 beträgt etwa W1:S2 = 2:1.

Fig. 7 zeigt eine vereinfachte Ausführung der Schaltung nach Fig. 6. Die in Fig. 6 dargestellte Induktivität LH ist in Fig. 7 nicht mehr vorhanden, sondern durch die Streuinduktivität der Sekundärwicklung W2 des Übetragers Tr2 gebildet. Die Induktivität LH wird dadurch als gesondertes Bauteil in Form einer Drossel nicht mehr benötigt.

Fig. 8 zeigt eine praktische Ausführung des Transformator Tr2. Die Primärwicklung W1 und die Sekundärwicklung W2 liegen in zwei Kammern K1 und K2 eines Kammerspulenkörpers C. Die Kammern K1, K2 sind durch einen nicht bewickelten Zwischenraum B in Axialrichtung des Spulenkörpers C voneinander beabstandet. Durch Wahl dieses Abstandes B kann die gewünschte Streuinduktivität für die Sekundärwicklung W2 zur Realisierung der Induktivität LH eingestellt werden.

Bei einer praktisch erprobten Schaltung hatten die Bauteile folgende Werte

| | |
|---|---|
| CN | 0,7 µF |
| CS | 100 µF |
| LH | 300 µH, in Fig. 6 nur 75 µH |

## Patentansprüche

1. Schaltnetzteil mit verringerter Oberwellenbelastung des Netzes, bei dem der Ausgang des Netzgleichrichters (BR) an einen Ladekondensator (CN) und an die Reihenschaltung der Arbeitswicklung (W1) eines Transformators (Tr) und eines Schalttransistors (T1) angeschlossen ist, und folgende Merkmale aufweist:
a) der Ladekondensator (CN) ist so klein bemessen, daß seine Spannung (UCN) eine ungesiebte Halbwellen-Sinusspannung gleichbleibender Polarität ist,
b) parallel zu der Reihenschaltung (W1, T1) liegt der Speicherkondensator (CS) so großer Kapazität, daß seine Spannung (UCS) eine gesiebte Gleichspannung ist,
c) der Ladekondensator (CN) ist über die Reihenschaltung einer Drossel (LH) und einer Diode (DH) mit einem Abgriff (A) der Primärwicklung (W1) verbunden,
d) zwischen dem Ladekondensator (CN) und dem Speicherkondensator (CS) liegt ein Entkopplungselement (DN).

2. Netzteil nach Anspruch 1, **dadurch gekennzeichnet,** daß das Entkopplungselement (DN) durch eine Diode (DN) gebildet ist.

3. Netzteil nach Anspruch 1, **dadurch gekennzeichnet**, daß die jeweils die Spannung führenden Elektroden des Ladekondensators (CN) und des Speicherkondensators (CS) über kein Element miteinander verbunden sind.

4. Netzteil nach Anspruch 1, **dadurch gekennzeichnet**, daß das Windungsverhältnis (W) zwischen der Teilwicklung zwischen dem Abgriff (A) und dem Schalttransistor (T1) und der Teilwicklung zwischen dem Abgriff (A) und dem mit dem Speicherkondensator (CS) verbundenen Ende der Primärwicklung (W1) etwa 2:1 beträgt.

5. Netzteil nach Anspruch 1, **dadurch gekennzeichnet,** daß der Abgriff der Primärwicklung (W1) durch das eine Ende einer Zusatzwicklung (W3) des Transformators (Trl) gebildet ist, deren anderes Ende mit einem Ende der Primärwicklung (W1) verbunden ist.

6. Netzteil nach Anspruch 5 , **dadurch gekennzeichnet,** daß mehrere parallel geschaltete Zusatzwicklungen (W3a-c) vorgesehen sind.

7. Netzteil nach Anspruch 5, **dadurch gekennzeichnet,** daß die Arbeitswicklung (W1) in mehrere Teilwicklungen (Wla-c) aufgeteilt ist, die in getrennten Kammern eines Kammerspulenkörpers liegen und daß jeweils in einer Kammer eine Zusatzwicklung (W3a-c) liegt.

8. Netzteil nach Anspruch 1, **dadurch gekennzeichnet**, daß der Ladekondensator (CN) so bemessen ist, daß seine Spannung (UCN) im Bereich des Nulldurchgangs der Netzspannung (UN) nicht auf null abfällt und dort einen konstanten Wert hat.

9. Netzteil nach Anspruch 1, **dadurch gekennzeichnet**, daß der Ladekondensator (CN) eine Kapazität von etwa 0,5 µF hat.

10. Netzteil nach Anspruch 1, **dadurch gekennzeichnet**, daß der Speicherkondensator (CS) eine Kapazität von etwa 100 µF hat.

11. Schaltnetzteil mit verringerter Oberwellenbelastung des Netzes, bei dem der Ausgang des Netzgleichrichters (BR) an einen Ladekondensator (CN) und über die Reihenschaltung einer ersten Induktivität (LH) und einer Diode (DH) an einen Schalttransistor (T1) und der Schalttransistor über eine zweite Induktivität (W1) an einen die Betriebsspannung (UB) liefernden Siebkondensator (C1) angeschlossen ist, wobei in Reihe mit der ersten Induktivität (LH) eine dritte Induktivität (W2) liegt, die mit der zweiten Induktivität (W1) gekoppelt ist, und wobei der Ausgang des Netzgleichrichters über eine Diode (DN) an einen Speicherkondensator (CS) großer Kapazität und an den Schalttransistor ansgeschlossen ist.

12. Netzteil nach Anspruch 11, **dadurch gekennzeichnet,** daß die zweite Induktivität durch die Primärwicklung (W1) eines Transformators (Tr2) gebildet ist, dessen Sekundärwicklung (W2) die dritte Induktivität bildet.

13. Netzteil nach Anspruch 11, **dadurch gekennzeichnet,** daß der Ausgang des Netzgleichrichters (BR) über die Reihenschaltung der ersten Induktivität (LH), der dritten Induktivität (W2) des ersten Gleichrichters (DH), der Kollektor/Emitterstrecke eines Transistors (T1) und der zweiten Induktivität (W1) mit einem die Betriebsspannung (UB) liefernden Siebkondensator (C1) verbunden ist.

14. Netzteil nach Anspruch 11, **dadurch gekennzeichnet,** daß die von dem Netzteil gespeiste Last eine Leuchtröhre, insbesondere eine Metall-Halogen-Lampe ist.

15. Netzteil nach Anspruch 12, **dadurch gekennzeichnet,** daß das Windungsverhältnis der Primärwicklung (W1) zur Sekundärwicklung (W2) des Transformators (Tr2) etwa 2:1 beträgt.

16. Netzteil nach Anspruch 12, **dadurch gekennzeichnet,** daß die erste Induktivität (LH) durch die Streuinduktivität der Sekundärwicklung (W2) des Transformators (Tr2) gebildet ist.

17. Netzteil nach Anspruch 16, **dadurch gekennzeichnet,** daß die Primärwicklung (W1) und die Sekundärwicklung (W2) des Transformators (Tr2) in zwei Kammern (K1, K2) eines Kammerspulenkörpers (C) liegen.

18. Netzteil nach Anspruch 17, **dadurch gekennzeichnet,** daß die beiden Kammern (K1, K2) durch einen nicht bewickelten Zwischenraum (B) in Axialrichtung voneinander beabstandet sind.

## Claims

1. Switched mode power supply with a reduced harmonic load on the mains, in the case of which the output of the mains rectifier (BR) is connected to a charge capacitor (CN) and to the series circuit formed by the main winding (W1) of a transformer (Tr) and a switching transistor (T1), and has the following features:
a) the charge capacitor (CN) is dimensioned to be so small that its voltage (UCN) is an unfiltered half-wave sinusoidal voltage of constant polarity,
b) the energy storage capacitor (CS) is connected in parallel with the series circuit (W1, T1) and its capacitance is so large that its voltage (UCS) is a filtered DC voltage,
c) the charge capacitor (CN) is connected to a pickoff (A) of the primary winding (W1) via the series circuit formed by an inductor (LH) and a diode (DH),
d) a decoupling element (DN) is connected between the charge capacitor (CN) and the energy storage capacitor (CS).

2. Power supply according to Claim 1, characterized in that the decoupling element (DN) is formed by a diode (DN).

3. Power supply according to Claim 1, characterized in that those electrodes of the charge capacitor (CN) and of the energy storage capacitor (CS) which are in each case live are not connected to one another via any element.

4. Power supply according to Claim 1, characterized in that the turns ratio (W) between the winding part between the pickoff (A) and the switching transistor (T1) and the winding part between the pickoff (A) and that end of the primary winding (W1) which is connected to the energy storage capacitor (CS) is approximately 2:1.

5. Power supply according to Claim 1, characterized in that the pickoff of the primary winding (W1) is formed by one end of an additional winding (W3) of the transformer (Tr1), its other end being connected to one end of the primary winding (W1).

6. Power supply according to Claim 5, characterized in that a plurality of parallel-connected additional windings (W3a-c) are provided.

7. Power supply according to claim 5, characterized in that the main winding (W1) is split into a plurality of winding parts (W1a-c) which are located in separate chambers in a chamber coil former, and in that an additional winding (W3a-c) is located in each chamber.

8. Power supply according to Claim 1, characterized in that the charge capacitor (CN) is dimensioned such that its voltage (UCN) does not fall to zero in the region of the zero crossover of the mains voltage (UN), and has a constant value there.

9. Power supply according to Claim 1, characterized in that the charge capacitor (CN) has a capacitance of approximately 0.5 µF.

10. Power supply according to Claim 1, characterized in that the energy storage capacitor (CS) has a capacitance of approximately 100 µF.

11. Switched mode power supply with a reduced harmonic load on the mains, in the case of which the output of the mains rectifier (BR) is connected to a charge capacitor (CN) and to a switching transistor (T1) via the series circuit formed by a first inductance (LH) and a diode (DH), and the switching transistor is connected via a second inductance (W1) to a filter capacitor (C1) which supplies the operating voltage (UB), a third inductance (W2), which is coupled to the second inductance (W1), being connected in series with the first inductance (LH), and the output of the mains rectifier being connected to an energy storage capacitor (CS) of large capacitance and to the switching transistor via a diode (DN).

12. Power supply according to Claim 11, characterized in that the second inductance is formed by the primary winding (W1) of a transformer (Tr2) whose secondary winding (W2) forms the third inductance.

13. Power supply according to Claim 11, characterized in that the output of the mains rectifier (BR) is connected to a filter capacitor (C1), which supplies the operating voltage (UB), via the series circuit formed by the first inductance (LH), the third inductance (W2) of the first rectifier (DH), the collector/emitter path through a transistor (T1) and the second inductance (W1).

14. Power supply according to Claim 11, characterized in that the load which is supplied by the power supply is a fluorescent tube, in particular a metal-halogen lamp.

15. Power supply according to Claim 12, characterized in that the turns ratio of the primary winding (W1) with respect to the secondary winding (W2) of the transformer (Tr2) is approximately 2:1.

16. Power supply according to Claim 12, characterized in that the first inductance (LH) is formed by the stray inductance of the secondary winding (W2) of the transformer (Tr2).

17. Power supply according to Claim 16, characterized in that the primary winding (W1) and the secondary winding (W2) of the transformer (Tr2) are located in two chambers (K1, K2) in a chamber coil former (C).

18. Power supply according to Claim 17, characterized in that the two chambers (K1, K2) are spaced apart from one another in the axial direction by means of an intermediate space (B) which is not wound.

## Revendications

1. Alimentation à découpage avec charge harmonique réduite du réseau, dont la sortie du redresseur de réseau (BR) est reliée à un condensateur de charge (CN) et au circuit série du bobinage primaire (W1) d'un transformateur (Tr) et d'un transistor commutateur (T1) et présentant les caractéristiques suivantes :
a) Le condensateur de charge (CN) a des dimensions si réduites que sa tension (UCN) est une tension sinusoïdale demi-onde non filtrée restant dans la même polarité.
b) Parallèlement au montage en série (W1, T1), se trouve le condensateur accumulateur (CS) avec une capacité si importante que sa tension (UCS) est une tension continue filtrée.
c) Le condensateur de charge (CN) est relié, via le montage en série d'un self (LH) et d'une diode (DH), à une prise (A) du bobinage primaire (W1).
d) Un élément de découplage (DN) est placé entre le condensateur de charge (CN) et le condensateur accumulateur (CS).

2. Alimentation selon la revendication 1, **caractérisée en ce que** l'élément de découplage (DN) est une diode (DN).

3. Alimentation selon la revendication 1, **caractérisée en ce que** les électrodes du condensateur de charge (CN) et du condensateur accumulateur (CS) acheminant la tension ne sont reliées entre elles par aucun élément.

4. Alimentation selon la revendication 1, **caractérisée en ce que** le rapport d'enroulements (W) entre le bobinage partiel situé entre la prise (A) et le transistor commutateur (T1) et l'extrémité du bobinage primaire (W1) reliée au condensateur accumulateur (CS) est de 2:1 environ.

5. Alimentation selon la revendication 1, **caractérisée en ce que** la prise du bobinage primaire (W1) correspond à l'une des extrémités d'un bobinage supplémentaire (W3) du transformateur (Tr1) et dont l'autre extrémité est reliée à l'une des extrémités bobinage primaire (W1).

6. Alimentation selon la revendication 5, **caractérisée en ce que** plusieurs bobinages supplémentaires (W3a-c) montés parallèlement en série sont prévus.

7. Alimentation selon la revendication 5, **caractérisée en ce que** le bobinage primaire (W1) est divisé en plusieurs bobinages partiels (W1a-c) qui sont placés dans des chambres séparées d'une carcasse de bobine à chambres. Chaque chambre contient également un bobinage supplémentaire (W3a-c).

8. Alimentation selon la revendication 1, **caractérisée en ce que** le condensateur de charge (CN) est dimensionné de façon à ce que sa tension (UCN) dans le domaine du passage par zéro de la tension du réseau (UN) ne chute pas à zéro et présente au contraire une valeur constante.

9. Alimentation selon la revendication 1, **caractérisée en ce que** le condensateur de charge (CN) possède une capacité d'environ 0,5 µF.

10. Alimentation selon la revendication 1, **caractérisée en ce que** le condensateur accumulateur (CS) possède une capacité d'environ 100 µF.

11. Alimentation à découpage avec charge harmonique réduite du réseau, dont la sortie du redresseur de réseau (BR) est reliée à un condensateur de charge (CN) et, via le montage en série d'une première inductance (LH) et d'une diode (DH), à un transistor commutateur (T1). Ce transistor commutateur est relié, via une seconde inductance (W1), à un condensateur de filtrage (C1) fournissant la tension de service (UB) où est montée en série avec la première inductance (LH) une troisième inductance (W2) qui est elle-même couplée avec la deuxième inductance (W1) et où la sortie du redresseur de réseau est reliée, via une diode (DN), à un condensateur accumulateur de plus grande capacité et au transistor commutateur.

12. Alimentation selon la revendication 11, **caractérisée en ce que** la deuxième inductance correspond au bobinage primaire (W1) d'un transformateur (Tr2) et dont le bobinage secondaire (W2) correspond à la troisième inductance.

13. Alimentation selon la revendication 11, **caractérisée en ce que** la sortie du redresseur de réseau (BR) est reliée, via le montage en série de la première inductance (LH), de la troisième inductance (W2) du premier redresseur (DH), de la piste collecteur/émetteur d'un transistor (T1) et la deuxième inductance (W1), à un condensateur de filtrage (C1) fournissant la tension de service (UB).

14. Alimentation selon la revendication 11, **caractérisée en ce que** la charge alimentée par le bloc d'alimentation est un tube luminescent, et plus particulièrement une lampe à halogène-métal.

15. Alimentation selon la revendication 12, **caractérisée en ce que** le rapport d'enroulements du bobinage primaire (W1) par rapport au bobinage secondaire (W2) du transformateur (Tr2) est de 2:1 environ.

16. Alimentation selon la revendication 12, **caractérisée en ce que** la première inductance (LH) correspond à l'inductance de fuite du bobinage secondaire (W2) du transformateur (Tr2).

17. Alimentation selon la revendication 16, **caractérisée en ce que** le bobinage primaire (W1) et le bobinage secondaire (W2) du transformateur (Tr2) sont placés dans deux chambres (K1, K2) d'une carcasse de bobine à chambres (C).

18. Alimentation selon la revendication 17, **caractérisée en ce que** les deux chambres (K1, K2) sont séparées l'une de l'autre par un intervalle non enroulé (B) dans le sens axial.
